# EUROPÄISCHE PATENTSCHRIFT

(11) **EP 3 112 008 B1**
(45) Veröffentlichungstag und Bekanntmachung des Hinweises auf die Patenterteilung: **28.03.2018**
(21) Anmeldenummer: 16173457.9
(22) Anmeldetag: 08.06.2016
(51) Int. Cl.: B01D 53/04, B01D 53/86, B01D 53/96, F24C 15/20

(54) **VERFAHREN ZUR REGENERIERUNG EINES ADSORBERS MITTELS PLASMAQUELLE**
METHOD FOR REGENERATING AN ADSORBER USING A PLASMA SOURCE
PROCÉDÉ DE RÉGÉNÉRATION D'UN ADSORBEUR UTILISANT UNE SOURCE DE PLASMA

(30) Priorität: 29.06.2015 DE 102015212039
(43) Veröffentlichungstag der Anmeldung: 04.01.2017
(73) Patentinhaber: E.G.O. Elektro-Gerätebau GmbH, 75038 Oberderdingen (DE)
(72) Erfinder: Gärtner, Norbert, 76275 Ettlingen (DE); Holzer, Frank, 04103 Leipzig (DE); Kopinke, Frank-Dieter, 04109 Leipzig (DE); Riffel, Michael, 75038 Oberderdingen (DE); Schönemann, Konrad, 75056 Sulzfeld (DE); Roland, Ulf, 04158 Leipzig (DE)
(74) Vertreter: Patentanwälte Ruff, Wilhelm, Beier, Dauster & Partner mbB

(56) Entgegenhaltungen:
- WO-A1-2012/127169
- WO-A2-2004/014439
- CN-B- 102 188 879
- FR-A1- 2 921 867
- OKUBO M ET AL: "NOx reduction using nitrogen nonthermal plasma desorption", INDUSTRY APPLICATIONS CONFERENCE, 2004. 39TH IAS ANNUAL MEETING. CONFE RENCE RECORD OF THE 2004 IEEE SEATTLE, WA, USA 3-7 OCT. 2004, PISCATAWAY, NJ, USA,IEEE, Bd. 1, 3. Oktober 2004 (2004-10-03), Seiten 566-573, XP010735268, DOI: 10.1109/IAS.2004.1348462 ISBN: 978-0-7803-8486-6

## Beschreibung

### Anwendungsgebiet und Stand der Technik

Die Erfindung betrifft ein Verfahren zur Regenerierung eines Adsorbers.

Aus der DE 10158970 A1 ist ein Verfahren bekannt, mit dem oxidierbare Stoffe bzw. VOC-Bestandteile aus einem Luftstrom entfernt werden können. Ebenso ist daraus eine entsprechende Vorrichtung zur Durchführung dieses Verfahrens bekannt. Daraus geht hervor, insbesondere zum Entfernen oxidierbarer Stoffe aus Kabinenluft von Flugzeugen, dass in einem Schichtaufbau Adsorber, Elektroden und Barriereschicht dazwischen als Baueinheit ausgebildet sind. Dabei bilden zwei beabstandete Elektroden und eine dazwischenliegende Barriere eine Plasmaquelle mit einer dielektrischen Barrierenentladung.

Aus der FR 2921867 A1 ist ein Verfahren bekannt zur Regenerierung eines Adsorbers, der integral mit mindestens einer Plasmaquelle als Baueinheit ausgebildet ist. Der Adsorber wird von einem Volumenstrom durchströmt in Form eines gesteuerten Luftstroms. Dabei werden nicht-thermisch mittels der Plasmaquelle und unter Verwendung einer Hochspannung Oxidationsmittel im Volumenstrom und an der Adsorberoberfläche erzeugt. Eine automatische Regelung der Zeiten für die Sorption und Desorption von Material auf dem Adsorber ist vorgesehen. Zu Beginn einer Regenerierung des Adsorbers können ein geringer Volumenstrom und gegen Ende der Regenerierung ein höherer Volumenstrom eingestellt werden.

Aus der WO 2004/014439 A2 ist ein Verfahren bekannt, um Luft mit einem nicht-thermischen Plasma zu behandeln. Dabei sollen Verunreinigungen aus der Luft entfernt werden.

Aus der WO 2012/127169 A1 ist eine Vorrichtung zur Behandlung von Luft bekannt, die eine Adsorbereinheit in einem Haupt-Luftkanal aufweist. Ein Neben-Luftkanal ist vorgesehen, in dem eine Plasma-Einheit angeordnet ist, die Plasma erzeugt. Sie wird während des Betriebs zur Regeneration des Systems eingesetzt und beeinträchtigt wegen ihrer Anordnung in dem Neben-Luftkanal den Luftstrom durch die Adsorbereinheit nicht.

### Aufgabe und Lösung

Der Erfindung liegt die Aufgabe zugrunde, ein eingangs genanntes Verfahren zu schaffen, mit dem Probleme des Stands der Technik gelöst werden können und es insbesondere möglich ist, einen Adsorber gut und einfach zu reinigen sowie dessen vorteilhaften Betrieb sicherzustellen.

Gelöst wird diese Aufgabe durch ein Verfahren mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Es ist vorgesehen, dass der Adsorber integral mit mindestens einer Plasmaquelle als Baueinheit ausgebildet ist. Dabei wird der Adsorber von einem gesteuerten Luftstrom durchströmt. Dieser Luftstrom kann unter Umständen auch durch einen zur Adsorbervorrichtung selbst gehörenden Lüfter oder Ventilator gesteuert werden. In einer Adsorber-Phase bzw. einem FilterBetrieb wird der Luftstrom durch den Adsorber gereinigt, indem sich verschiedene Stoffe, insbesondere gasförmige organische Stoffe als sogenannte VOC an dem Adsorber anlagern und somit aus dem Luftstrom entfernt werden, wobei organische Feststoffe, Partikel und Fettaerosole bereits vorher abgeschieden werden, üblicherweise in einem Fettabscheider. Dies ist beispielsweise bei Verwendung und Betrieb der Adsorbervorrichtung in einem Dunstabzug bzw. einer Küchenabzugshaube oder einer sonstigen Abluftvorrichtung möglich und vorteilhaft. Diese Adsorption des durchströmenden Luftstroms bzw. der darin enthaltenen Bestandteile, also im Prinzip der Filterbetrieb, erfolgt vorteilhaft kalt und somit ohne zusätzliche Einbringung von Heizenergie. Dabei steigt die Konzentration der herausgefilterten Bestandteile am Adsorber an, was sowohl dessen Durchlässigkeit einerseits und Adsorptionsfähigkeit andererseits über die Zeit negativ beeinträchtigt, so dass er gereinigt werden muss.

Zur Reinigung des Adsorbers in einer Regenerierungs-Phase wird erfindungsgemäß die Plasmaquelle, die vorteilhaft während der Filter- bzw. Adsorber-Phase nicht betrieben wird, verwendet. Dabei wird sowohl eine Temperatur im Luftstrom als auch die Stärke des Luftstroms durch den Adsorber geregelt derart, dass von der Plasmaquelle erzeugtes Oxidationsmittel ausreichend bzw. möglichst gut genutzt wird. Mit der Plasmaquelle werden nicht-thermisch gasförmige Oxidationsmittel im Volumenstrom und am Adsorber bzw. an dessen Oberfläche erzeugt, insbesondere Sauerstoffradikale und Ozon. Die Plasmaquelle kann als Plasmagenerator ausgebildet sein im Wesentlichen entsprechend dem Stand der Technik, vorteilhaft als Hochspannungs-Plasmaquelle. Dabei ist vorgesehen, dass zu Beginn der Regenerierungs-Phase des Adsorbers ein geringer Luft- bzw. Volumenstrom eingestellt wird, wobei ein Lüfter odgl., der entweder der Adsorbervorrichtung vorgeschaltet ist oder aber Teil der Adsorbervorrichtung ist, auf alle Fälle aber von dieser bzw. einer gleichen Steuerung angesteuert wird, mit relativ geringer Leistung arbeitet. Vorteilhaft beträgt während der Regenerierungs-Phase ein Luft- bzw. Volumenstrom zwischen 0,5% und 2% bis 5% oder 10% dessen, was während der Filter- bzw. Adsorber-Phase durch den Adsorber strömt.

Eine Temperaturerhöhung dieses Luftstroms wird relativ niedrig eingestellt, insbesondere nicht oder nur wenige °C, vorteilhaft 1°C bis 15°C, über der Raumtemperatur gewählt. Eine hierfür vorgesehene Heizeinrichtung wird also nicht mit besonders hoher Leistung für hohe Temperaturen betrieben. Eine Plasmaspannung an der Plasmaquelle wird zu Beginn der Regenerierungs-Phase, also im zeitlich ersten Drittel oder Viertel, hoch bzw. höher eingestellt bzw. die Plasmaquelle wird mit hoher oder höherer Leistung betrieben, um relativ große Mengen an Oxidationsmittel zu erzeugen. Gegen Ende der Regenerierungs-Phase, insbesondere im zeitlich letzten Drittel oder Viertel, wird dagegen der Luftstrom höher eingestellt, es erfolgt also eine relativ starke Durchströmung des Adsorbers. Hierfür wird der vorgenannte Ventilator bzw. Lüfter entsprechend angesteuert. Die Temperatur für den Luftstrom wird dann höher bzw. eher hoch eingestellt, beispielsweise auf 100°C bis 250°C oder sogar 350°C. Die Plasmaspannung dagegen wird niedriger eingestellt, so dass nur eine relativ geringe Menge an Oxidationsmittel erzeugt wird. So kann eine dem Fortschritt der Regenerierung des Adsorbers angepasste Nutzung der Oxidationsmittel erreicht werden. Das Einstellen der anfänglich relativ geringen Temperatur bewirkt, dass die VOC noch sorbiert an der Oberfläche des VOC-Adsorbers vorliegen und dort durch die Oxidationsmittel entfernt werden. Somit wird zu Beginn der Regenerierungs-Phase vor allem viel Oxidationsmittel erzeugt und durch den geringen Volumenstrom und die geringe Temperatur befindet sich eine große Menge an Oxidationsmittel im Adsorber. So können leicht entfernbare Ablagerungen bzw. herausgefilterte VOC schnell entfernt werden. Darüber hinaus bewirkt die zu Beginn der Regenerierungs-Phase eingestellte geringe Temperatur im Adsorber, dass die gasförmigen Oxidationsmittel, insbesondere Ozon, eine höhere Lebensdauer aufweisen bevor diese wieder zu wenig reaktiven Gasmolekülen rekombinieren bzw. zersetzt werden.

Im Laufe der Regenerierungs-Phase bzw. zu ihrem Ende hin ist der Anteil an noch verbleibenden Verunreinigungen stark gesunken. Nun ist es vor allem wichtig, die noch auf dem Adsorber verbliebenen, schwerer entfernbaren organischen Verunreinigungen und das während der Filter- und Regenerierungsphase adsorbierte Wasser zu entfernen, weswegen die Temperatur des Adsorbers und der Luft- bzw. Volumenstrom hoch eingestellt werden. Dabei kann der Luft- bzw. Volumenstrom vorteilhaft zwischen zweimal und fünfmal bis zehnmal so hoch sein wie zu Beginn der Regenerierung. Die Temperatur wird signifikant erhöht werden, insbesondere um 50°C bis 200°C oder sogar 300°C. Die Plasmaspannung wird relativ niedrig eingestellt, beispielsweise zu 10% bis 30% oder sogar 50% der hohen Plasmaspannung zu Beginn der Regenerierung. Somit erzeugt die Plasmaquelle auch entsprechend weniger Oxidationsmittel, was aber auch nicht mehr in dem Umfang notwendig ist, da ja schon eine teilweise oder weitgehende Reinigung bzw. Regenerierung des Adsorbers erfolgt ist.

Mit der Erfindung kann unter anderem der Energieverbrauch bei der Reinigung bzw. Regenerierung eines Adsorbers gesenkt werden, da die energieintensiven Einflussfaktoren des Volumenstroms und der Temperatur, die durch einen Ventilator bzw. einer Heizeinrichtung erreicht werden müssen, erst gegen Ende der Regenerierung erhöht werden. Dabei kann vorgesehen sein, dass zwischen 25% und 50% der Dauer der Regenerierung als Anfangs-Phase gewertet werden mit dem geringen Volumenstrom, der geringen Temperatur und der hohen Plasmaspannung. Diese drei Faktoren können während der Anfangs-Phase vorteilhaft unverändert bleiben.

In der End-Phase der Regenerierung, die wiederum zwischen 10% und 25% oder sogar 35% der gesamten Dauer der Regenerierung dauern kann, werden diese drei Faktoren erfindungsgemäß verändert. Dabei können sie nach der Veränderung ebenfalls wieder im Wesentlichen, insbesondere vollständig, konstant bleiben.

In Ausgestaltung der Erfindung ist es möglich, dem Adsorber eine katalytisch aktive Komponente hinzuzufügen, vorzugsweise als katalytisch aktive Schicht. Vorteilhaft wird auf dem Adsorber eine katalytisch aktive Komponente aufgebracht, wie aus dem Stand der Technik bekannt ist. So kann ein Katalysator in Form von Clustern, also winzig kleinen Kügelchen, auf der inneren Oberfläche des Adsorbers aufgebracht werden. Der Katalysator unterstützt die Regenerierung des Adsorbers durch Oxidation der sorbierten organischen Verbindungen. Damit dient die Erhöhung der Temperatur des Adsorbers in der End-Phase der Regenerierung auch der Aktivierung des Katalysators.

Zusätzlich ist es möglich, nicht nur die Plasmaquelle und den Adsorber möglichst nahe zusammen anzuordnen, also direkt nebeneinander oder sogar integriert auszubilden, sondern auch eine Katalysatoreinrichtung räumlich nahe daran anzuordnen. Dadurch kann eine Regenerierung des Adsorbers unterstützt werden, insbesondere für den Fall, dass der Adsorber erwärmt wird.

Eine Heizeinrichtung, Heizmittel odgl. zum Aufheizen des Luftstroms durch den Adsorber können vorteilhaft zusätzlich im Luftstrom vor dem Adsorber bzw. am Einlass der Adsorbervorrichtung vorgesehen sein. Sie können zwar relativ nahe an dem Adsorber bzw. der Plasmaquelle angeordnet sein. Der Abstand kann jedoch so groß sein, dass die Heizmittel hauptsächlich, insbesondere nur, den Luftstrom erwärmen und höchstens darüber indirekt den Adsorber bzw. die Plasmaquelle, nicht aber direkt. So kann ein zu hoher Energieverbrauch für die Heizmittel vermieden werden. Es ist möglich, mehrere Heizmittel im Luftstrom vorzusehen, beispielsweise vor und nach der Baueinheit mit dem Adsorber und der Plasmaquelle.

Des Weiteren ist es aber auch möglich, den Adsorber und damit den Katalysator direkt zu beheizen. Aus chemischer Sicht dient diese Möglichkeit nicht nur der bei erhöhten Temperaturen effektiveren katalytischen Oxidation der adsorbierten organischen Verbindungen bzw. VOC, sondern vor allem auch der schnelleren Desorption der Oxidationsprodukte bzw. von H₂O. In einer vorteilhaften Ausführung der Erfindung entspricht der Katalysator einem Ozon-Zersetzungskatalysator. Im Fall eines beheizten Ozon-Zersetzungskatalysators läuft die Ozonzersetzung bei höheren Temperaturen ebenfalls wesentlich schneller ab als bei Raumtemperatur. Des Weiteren erlaubt eine intelligente Temperatur-Volumenstrom-Steuerung in der Baueinheit aus Adsorber und Katalysator durch eine graduelle Temperaturerhöhung während der Regenerierung eine Minimierung des Austrags von organischen Zwischenprodukten zu Beginn der Regenerierungs-Phase und eine Maximierung der Desorption von Wasser an deren Ende.

In einer erfindungsgemäßen Erweiterung wird zwischen dem Adsorber und dem Ozonzersetzungsreaktor eine Kondensationseinheit zur Kondensation organischer Intermediate und Wasser sowie zu deren effektiver Ableitung aus dem Prozess angeordnet.

Ein Ventilator bzw. ein Lüfter zum Erzeugen des Luftstroms kann im Prinzip an beliebiger Stelle im Luftstrom angeordnet sein, nur eben nicht zu nahe an den vorgenannten Heizmitteln, dem Adsorber oder der Plasmaquelle, um deren Funktion nicht zu beeinträchtigen. Vorteilhaft ist ein Ventilator bzw. Lüfter hinter dem Adsorber und der Plasmaquelle angeordnet, so dass daran möglichst wenig Verunreinigungen hängen bleiben und deren Teile von den Heizmitteln nicht unnötig mitgeheizt werden müssen.

Während der Regenerierung des Adsorbers kann in Ausgestaltung der Erfindung die Konzentration gemessen werden von Sauerstoff, Ozon, den vorgenannten VOC und/oder Kohlendioxid. Diese gemessene Konzentration kann zur Regelung des Luftstroms, der Temperatur und/oder der Plasmaspannung verwendet werden. Eine Messung der Konzentration kann vor dem Absorber und/oder hinter dem Adsorber erfolgen, vorteilhaft sowohl davor als auch dahinter. Eine Messung dahinter wird zwar als besonders bedeutsam angesehen, da damit die aus dem Adsorber bzw. der Adsorbervorrichtung austretende Luft bewertet werden kann. Durch eine Messung davor und dahinter kann aber auch das jeweilige Konzentrationsgefälle im Adsorber beurteilt werden. Steigt zum Beispiel die VOC-Konzentration im Luftstrom nach dem VOC-Adsorber während der Betriebs-Phase an, so muss die Regenerierungs-Phase gestartet werden. Ist beispielsweise die Konzentration an Kohlendioxid im Luftstrom hinter dem Adsorber noch relativ hoch, so sollte die Regenerierung länger und/oder intensiver durchgeführt werden. Möglicherweise kann auch die Anfangs-Phase der Regenerierung mit der höheren Erzeugung von Oxidationsmittel verlängert werden für eine verbesserte Regenerierungswirkung durch das Oxidationsmittel.

In Ausgestaltung der Erfindung ist es möglich, eine zusätzliche Plasmaquelle, insbesondere als Niedertemperatur-Plasmaquelle, einzusetzen. Diese kann entweder mit der vorgenannten Plasmaquelle und dem Adsorber zusammen als Baueinheit ausgebildet sein. Alternativ kann sie dem Adsorber vorgeschaltet sein. Sie kann bei besonders starker Verunreinigung des Adsorbers zumindest zeitweise zusätzlich eingesetzt werden. Eine solche zweite Plasmaquelle sollte als Baueinheit bzw. in dem von ihr beanspruchten Raum ohne einen eigenen Adsorber ausgebildet sein, also nicht wie die erfindungsgemäße Baueinheit von Adsorber und Plasmaquelle. Schließlich soll sie nicht zur zusätzlichen Reinigung des Luftstroms bei Betrieb eines Dunstabzugs dienen, sondern nur zur verbesserten Regenerierung des Adsorbers.

In einer Ausgestaltung der Erfindung kann beispielsweise durch die vorgenannten Sensoren oder Messeinrichtungen für VOC und/oder Kohlendioxid der Grad der Verunreinigung des Adsorbers gemessen werden. Sobald dieser einen bestimmten Wert überschreitet, kann eine Regenerierung des Adsorbers veranlasst werden. Hierzu kann auch ein Luftstrom durch die Adsorbervorrichtung bzw. einen Dunstabzug odgl. vor und hinter dem Adsorber erfasst werden, wobei aus dem Vergleich der Werte auf die Verunreinigung des Adsorbers geschlossen werden kann. Eine Regenerierung des Adsorbers kann dann direkt beginnen außer in dem Fall, dass sich der Dunstabzug gerade in der Betriebsphase befindet. Dann bringt die Verwendung des Oxidationsmittels sehr wenig. Es sollte dann bis zu einem Betriebsende des Dunstabzugs gewartet werden. Alternativ kann ein bestimmter günstiger dem Nutzerverhalten angepasster Zeitraum für die Regenerierung verwendet werden, beispielsweise nachts. Dann wird ein Dunstabzug mit sehr hoher Wahrscheinlichkeit nicht benutzt. Des Weiteren stören weder Betriebsgeräusche noch möglicherweise entstehende Geruchsbelästigungen.

Alternativ kann eine zyklische Regenerierung des Adsorbers vorgesehen sein mit im Wesentlichen festen Zykluszeiten, beispielsweise einmal pro Woche oder einmal pro Monat. Auch hierfür kann gezielt ein vorgenannter günstiger Zeitraum während der Nacht genutzt werden.

In einer nochmals weiteren Alternative ist es möglich, insbesondere wenn keine vorgenannten Sensoren vorgesehen sind, nach einer bestimmten Betriebsdauer des Dunstabzugs eine Regenerierung des Adsorbers zu starten, vorteilhaft wieder während eines passenden Zeitraums.

Vorteilhaft kann das Oxidationsmittel nicht-thermisch bzw. bei niedrigen Temperaturen unter 300°C erzeugt werden, vorzugsweise sogar unter 100°C bzw. ohne explizite gezielte Beheizung. Besonders vorteilhaft kann das Oxidationsmittel durch Hochspannung erzeugt werden, beispielsweise zwischen zwei durch eine dielektrische Barriere getrennte Elektroden, wovon die eine eine Hochspannungselektrode ist und die andere eine geerdete Elektrode. Es wird also kein Lichtbogen odgl. erzeugt. So kann auch die Sicherheit in dem Filter bzw. Adsorber erhöht werden, da die VOC durchaus auch aufgrund des Fettanteils beim Kochen von Lebensmitteln brennbar sein können. Des Weiteren kann der Energieverbrauch niedrig bleiben.

Eine Steuereinrichtung der Adsorbervorrichtung ist vorteilhaft auch eine Steuervorrichtung des gesamten Geräts, zu dem die Adsorbervorrichtung gehört, also beispielsweise des Dunstabzugs bzw. einer Küchenabzugshaube oder einer sonstigen Lüftungs- und/oder Reinigungsvorrichtung.
Diese und weitere Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränken die unter diesen gemachten Aussagen nicht in ihrer Allgemeingültigkeit.

### Kurzbeschreibung der Zeichnungen

Weitere Vorteile und Aspekte der Erfindung ergeben sich aus den Ansprüchen und aus der nachfolgenden Beschreibung der bevorzugten Ausführungsbeispiele der Erfindung, die nachfolgend anhand der Figuren erläutert sind. Dabei zeigen:
- Fig. 1: eine Adsorbervorrichtung, mit der das vorbeschriebene Verfahren durchgeführt werden kann, und
- Fig. 2: eine schematische Schnittdarstellung durch eine integrierte Baueinheit aus Adsorber, Katalysator und Plasmaquelle.

### Detaillierte Beschreibung der Ausführungsbeispiele

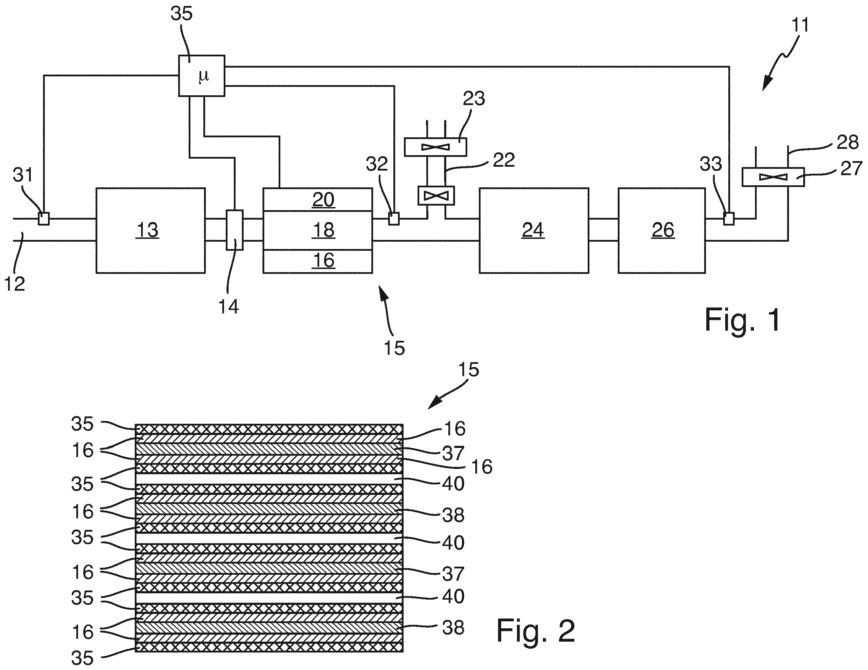

In Fig. 1 ist eine Adsorbervorrichtung 11 schematisch dargestellt, wie sie in Anlagen zur Entlüftung und/oder Luftreinigung eingesetzt werden kann, beispielsweise in einem Dunstabzug bzw. einer Küchenabzugshaube an oder über einem Kochgerät. Dazu kann die gesamte Adsorbervorrichtung 11 in einem entsprechenden Gehäuse angeordnet sein, was für den Fachmann aber leicht realisierbar ist.
Die Adsorbervorrichtung 11 weist einen Einlass 12 für zu reinigende Luft auf. Dieser Einlass 12 führt über einen Fettabscheider 13, der auf übliche Art und Weise ausgebildet ist. Der Fettabscheider 13 dient zum Abtrennen von Partikeln und Fettaerosolen. Dann geht der Luftstrom weiter an einer Heizung 14 vorbei, die nachfolgend noch beschrieben ist, da sie für die Regenerierungs-Phase benötigt wird.

Danach kommt eine Baueinheit 15, wie sie eingangs erläutert worden ist, die den Adsorber 16 beinhaltet. Der Adsorber 16 ist vorteilhaft hydrophob ausgebildet, beispielsweise mit USY-Zeolith, wobei sein Adsorbermaterial besonders vorteilhaft oxidationsresistent ist.

Der Prozess der Adsorption, der der normalen Betriebs-Phase eines Dunstabzugs bzw. der Adsorbervorrichtung 11 entspricht, wird realisiert, indem der zu reinigende Luftstrom den Adsorber 16 durchströmt. Der Adsorber 16 dient dazu, die geruchsintensiven Bestandteile, insbesondere VOC-Bestandteile, durch Adsorption aus dem Luftstrom zu entfernen. Die gereinigte Luft wird am Abzweig 22 ausgeblasen. Der Prozess der Adsorption verläuft bei Umgebungstemperatur mit großem Volumenstrom durch einen Ventilator 23, wobei große Volumenströme von bis zu 1000m³/h durch den Adsorber 16 geleitet werden können. Dabei ist eine Plasmaquelle 20 inaktiv. Der VOC-Adsorber 16 weist vorteilhaft einen hier schematisch getrennt dargestellten Katalysator 18 mit einer katalytisch aktiven Komponente auf, besonders vorteilhaft als Cluster bzw. winzig kleine Kügelchen auf der inneren Oberfläche des Adsorbers. Diese katalytisch aktive Komponente wirkt als Oxidationskatalysator und ist vorteilhaft vergiftungsresistent gegenüber schwefelhaltigen Verbindungen. Dafür können beispielsweise Mischmetalloxide verwendet werden.

Schließlich ist in einer Baueinheit 15 mit dem Adsorber 16 samt Katalysator 18 noch die vorgenannte Plasmaquelle 20 enthalten. Sie kann grundsätzlich auf bekannte Art und Weise ausgebildet sein, eben als Baueinheit mit dem Adsorber 16, so dass die Plasmaquelle 20 darin integriert sein kann. Dies bedeutet sehr kurze Wege und somit sehr kurze Zeitdauern, bis die von der Plasmaquelle 20 erzeugten Oxidationsmittel die Oberfläche des Adsorbers 16 erreichen, um dort die entsprechenden Verunreinigungen bzw. VOC-Bestandteile zu entfernen. Vorteilhaft weist die Plasmaquelle 20 eine dielektrische Barrierenentladung auf, wozu sie ein entsprechendes Dielektrikum aufweist. Hinter der Baueinheit 15 ist der Abzweig 22 für den Luftstrom vorgesehen, der verschließbar ausgebildet ist. Wird die Adsorbervorrichtung rein als Adsorber zur Luftreinigung eingesetzt, so kann beim Abzweig 22 sämtliche gereinigte Luft mittels des Ventilators 23 ausgeblasen werden. Der Ventilator 23 sollte eine entsprechende Leistung aufweisen, wie man dies beispielsweise von Dunstabzügen kennt.

Während der Regenerierungs-Phase ist dieser Abzweig 22 geschlossen, und der Luftstrom geht weiter in einen Kondensator 24. Dahinter kommt ein sogenannter Nachfilter 26, auch Polizeifilter genannt, der Aktivkohlematerialien oder auch mineralische, hydrophobe Adsorber wie beispielsweise Zeolithe aufweisen kann. Er kann auch als Schüttbettreaktor ausgelegt sein, da er während der Regenerierungs-Phase von einem geringen Luftstrom durchströmt wird, wie eingangs erläutert worden ist. Auch hier können katalytisch aktive Komponenten enthalten sein.

Hinter dem Nachfilter 26 ist ein Lüfter 27 vorgesehen, der während der Regenerierungs-Phase den Luftstrom zum Einlass 12 ansaugt. Insofern muss der Lüfter 27 nur für den dort vorgesehenen geringen Luftstrom ausgelegt sein. Dieser Luftstrom tritt dann am Auslass 28 aus.

Des Weiteren sind an der Adsorbervorrichtung 11 Sensoren 31, 32 und 33 vorgesehen. Diese erfassen einen Anteil an abzureinigenden Komponenten, insbesondere die vorgenannten VOC, und zwar am Einlass 12 der Sensor 31, hinter der Baueinheit 15 der Sensor 32 und hinter dem Nachfilter 26 der Sensor 33. Die Sensoren 31, 32 und 33 sind mit einer Steuerung 35 verbunden, die, wie dargestellt, auch die Heizung 14 ansteuert. Des Weiteren steuert die Steuereinrichtung 35 auch den Ventilator 23 und den Lüfter 27 an sowie vor allem die Plasmaquelle 20.

Auf zuvor beschriebene Art und Weise kann in bestimmten Abständen oder bedarfsweise nach Reinigung von Luft der Adsorber 16 mittels der Plasmaquelle 20 regeneriert werden. Dazu ist es unter anderem auch möglich, mittels der dargestellten Heizung 14 oder auch weiterer Heizungen den Temperaturverlauf vor allem in der Baueinheit 15 einzustellen, aber auch am Kondensator 24 und am Nachfilter 26. Über entsprechende Ansteuerung des Lüfters 27 kann die Menge des Luftstroms eingestellt werden. Schließlich kann die Steuereinrichtung 35 auch die Plasmaquelle 20 steuern, um die Menge an erzeugtem Oxidationsmittel einzustellen.

Die Fig. 2 zeigt einen schematischen Schnitt durch die Baueinheit 15 aus Adsorber bzw. Adsorber 16 und Plasmaquelle 20, die schichtweise dargestellt sind. Der Adsorber 16 trägt eine katalytisch aktive Komponente bzw. weist diese auf bekannte Art und Weise auf, so dass dieser Katalysator nicht separat dargestellt ist. Die oberste Schicht wird von einem eingangs beschriebenen Dielektrikum 35 für eine dielektrische Barrierenentladung gebildet. Das Dielektrikum 35 kann als konstruktiver Aufbau mit dem Adsorber 16 ein Grundgerüst für einen Wabenaufbau der Baueinheit 15 bilden, auch wenn hier eine Plattenstruktur dargestellt ist.

Zwischen zwei Schichten des Adsorbers 16 ist eine Hochspannungselektrode 37 angeordnet. Darunter ist dann noch einmal eine Schicht Dielektrikum 35 angeordnet. Unter diesem Schichtaufbau ist ein Gaskanal 40 vorgesehen für den Luftstrom, der die Baueinheit 15 durchströmt.

Unter dem Gaskanal 40 ist ein weiterer Schichtaufbau ähnlich wie zuvor beschrieben angeordnet, allerdings mit einer geerdeten Elektrode 38 anstelle der Hochspannungselektrode 37. Dann kommt wieder ein Gaskanal 40, und so weiter.
Die beschriebenen Varianten der dielektrischen Barrierenentladung können mit einer Hochspannung mit einer Frequenz von 50Hz betrieben werden, möglicherweise auch mit einer gepulsten Hochspannungsquelle mit Frequenzen im kHz-Bereich. Des Weiteren können kapazitiv oder induktiv eingekoppelte Radio- und Mikrowellenplasmen im hohen Frequenzbereich von MHz bis GHz verwendet werden, welche größere Mengen an Oxidationsmitteln erzeugen können. Für diese Variante würden die Elektroden entsprechend dem Stand der Technik außerhalb des Adsorbers bzw. dessen Baueinheit angebracht werden, und das Plasma induktiv bzw. kapazitiv in den Adsorber eingekoppelt.
Alternativ zu einem solchen Schichtaufbau der Baueinheit für Adsorber und Plasmaquelle kann auch eine Nadelgeometrie der Elektroden 37 und 38 gewählt werden, wie sie beispielsweise aus der von derselben Anmelderin eingereichten europäischen Patentanmeldung EP 14165365.9 vom 22. April 2014 hervorgeht.

## Patentansprüche

1. Verfahren zur Regenerierung eines Adsorbers (16), wobei der Adsorber integral mit mindestens einer Plasmaquelle (20) als Baueinheit (15) ausgebildet ist, mit den Schritten:
- der Adsorber (16) wird von einem gesteuerten Luftstrom als Volumenstrom durchströmt,
- mittels der Plasmaquelle (20) werden unter Verwendung einer Hochspannung nicht-thermisch Oxidationsmittel im Volumenstrom und an der Oberfläche des Adsorbers (16) erzeugt,
- eine Temperatur des Adsorbers (16) und der Volumenstrom durch den Adsorber werden während einer Regenerierungs-Phase für eine der Regenerierung des Adsorbers angepasste ausreichende Nutzung des Oxidationsmittels derart geregelt, dass
- zu Beginn der Regenerierung des Adsorbers (16) ein geringer Volumenstrom, eine geringe Temperatur und eine hohe Plasmaspannung eingestellt werden,
- gegen Ende der Regenerierung des Adsorbers (16) ein höherer Volumenstrom, eine höhere Temperatur und eine niedrigere Plasmaspannung eingestellt werden.

2. Verfahren nach Anspruch 1, **dadurch gekennzeichnet, dass** die Konzentration eines Stoffs aus der folgenden Gruppe: O₂, O₃, VOC oder CO₂ gemessen wird, wobei die gemessene Konzentration zur Regelung des Volumenstroms, der Temperatur und/oder der Plasmaspannung verwendet wird.

3. Verfahren nach Anspruch 1 oder 2, **gekennzeichnet durch** die Verwendung einer zweiten Plasmaquelle ohne Adsorber.

4. Verfahren nach einem der vorhergehenden Ansprüche, **dadurch gekennzeichnet, dass** eine zusätzliche Plasmaquelle als Niedertemperatur-Plasmaquelle nur bedarfsweise eingesetzt wird.

5. Verfahren nach einem der vorhergehenden Ansprüche, **dadurch gekennzeichnet, dass** Oxidationsmittel nicht-thermisch bzw. bei Temperaturen unter 300°C erzeugt werden, vorzugsweise unter 100°C.

6. Verfahren nach einem der vorhergehenden Ansprüche, **gekennzeichnet durch** einen zyklischen Betrieb zur zyklischen Regenerierung des Adsorbers (16).

7. Verfahren nach einem der vorhergehenden Ansprüche, **dadurch gekennzeichnet, dass** der Adsorber (16) und/oder die Plasmaquelle (20) erwärmt werden, insbesondere auf eine im Vergleich zur Adsorptionsphase des Adsorbers (16) erhöhte Temperatur.

## Claims

1. Method for regenerating an adsorber (16), wherein the adsorber is configured intregrally with at least one plasma source (20) in a structural unit (15), comprising the steps:
- a controlled flux of air flows through the adsorber (16) as a volume flow,
- by means of the plasma source (20), using a high voltage, oxidants are produced non-thermally in the volume flow and on the surface of the adsorber (16),
- a temperature of the adsorber (16) and the volume flow through the adsorber are regulated during a regenerating phase for sufficient utilization of the oxidant, adapted to the regeneration of the adsorber, such that
- a low volume flow, a low temperature and a high plasma voltage are set at the beginning of the regeneration of the adsorber (16),
- a higher volume flow, a higher temperature and a lower plasma voltage are set towards the end of the regeneration of the adsorber (16).

2. Method according to claim 1, **characterized in that** the concentration of an agent from the following group: O₂, O₃, VOC or CO₂ is measured, wherein the measured concentration is used for regulating the volume flow, the temperature and/or the plasma voltage.

3. Method according to claim 1 or 2, **characterized by** the use of a second plasma source without adsorber.

4. Method according to any of the preceding claims, **characterized in that** an additional plasma source is employed as a low-temperature plasma source only when needed.

5. Method according to any of the preceding claims, **characterized in that** oxidants are produced non-thermally or else at temperatures less than 300°C, preferably less than 100°C.

6. Method according to any of the preceding claims, **characterized by** cyclic operation for cyclic regeneration of the adsorber (16).

7. Method according to any of the preceding claims, **characterized in that** the adsorber (16) and/or the plasma source (20) are heated, in particular to a temperature elevated in comparison to that of the adsorption phase of the adsorber (16).

## Revendications

1. Procédé de régénération d'un adsorbeur (16), dans lequel l'adsorbeur est réalisé sous la forme d'une unité constitutive (15) faisant partie intégrante d'au moins une source de plasma (20), comportant les étapes suivantes :
- l'adsorbeur (16) est traversé par un flux d'air commandé en tant que flux volumique,
- des agents d'oxydation sont produits non thermiquement dans le flux volumique et sur la surface de l'adsorbeur (16) au moyen de la source de plasma (20) par utilisation d'une haute tension,
- une température de l'adsorbeur (16) et le flux volumique à travers l'adsorbeur sont régulées pendant une phase de régénération destinée à une utilisation suffisante de l'agent oxydant et adaptée à la régénération de l'adsorbeur de manière à
- régler un faible flux volumique, une faible température et une tension de plasma élevée au début de la régénération de l'adsorbeur (16),
- régler un flux volumique plus élevé, une température plus élevée et une tension de plasma plus faible à la fin de la régénération de l'adsorbeur (16).

2. Procédé selon la revendication 1, **caractérisé en ce que** la concentration d'un matériau appartenant au groupe constitué de : O₂, O₃, VOC ou CO₂, est mesurée, la concentration mesurée étant utilisée pour réguler le flux volumique, la température et/ou la tension du plasma.

3. Procédé selon la revendication 1 ou 2, **caractérisé par** l'utilisation d'une seconde source de plasma sans adsorbeur.

4. Procédé selon l'une des revendications précédentes, **caractérisé en ce qu'**une source de plasma supplémentaire n'est mise en oeuvre que selon les nécessités en tant que source de plasma à faible température.

5. Procédé selon l'une des revendications précédentes, **caractérisé en ce que** des agents d'oxydation sont produits non thermiquement, ou bien à des températures inférieures à 300°C, et de préférence, inférieures à 100°C.

6. Procédé selon l'une des revendications précédentes, **caractérisé par** un fonctionnement cyclique permettant de régénérer cycliquement l'adsorbeur (16).

7. Procédé selon l'une des revendications précédentes, **caractérisé en ce que** l'adsorbeur (16) et/ou la source de plasma (20) sont chauffés, en particulier à une température plus élevée par comparaison à celle de la phase d'adsorption de l'adsorbeur (16).
